# EUROPÄISCHE PATENTSCHRIFT

(11) **EP 3 769 052 B1**
(45) Veröffentlichungstag und Bekanntmachung des Hinweises auf die Patenterteilung: **10.05.2023**
(21) Anmeldenummer: 19701089.5
(22) Anmeldetag: 17.01.2019
(51) Int. Cl.: G01F 15/00, F15D 1/02, G01F 5/00, G01F 1/684, G01F 1/692

(54) **SENSORANORDNUNG**
SENSOR ASSEMBLY
ENSEMBLE DE CAPTEURS

(30) Priorität: 22.03.2018 DE 102018204415
(43) Veröffentlichungstag der Anmeldung: 27.01.2021
(73) Patentinhaber: Robert Bosch GmbH, 70442 Stuttgart (DE)
(72) Erfinder: HEUBACH, Hermann, 71384 Weinstadt (DE); KELLER, Michael, 70569 Stuttgart (DE)
(86) Internationale Anmeldenummer: PCT/EP2019/051190
(87) Internationale Veröffentlichungsnummer: WO 2019/179670

(56) Entgegenhaltungen:
- US-A- 2 929 248
- US-A1- 2014 338 771
- US-B1- 8 132 961
- LIU RAN ET AL: "Improving airflow measurement accuracy in VAV terminal units using flow conditioners", BUILDING AND ENVIRONMENT, PERGAMON PRESS, OXFORD, GB, Bd. 71, 5. Oktober 2013 (2013-10-05), Seiten 81-94, XP028784399, ISSN: 0360-1323, DOI: 10.1016/J.BUILDENV.2013.09.015

## Beschreibung

### Stand der Technik

Aus dem Stand der Technik sind verschiedenste Sensoranordnungen zur Bestimmung der Ansaugluftmasse einer Brennkraftmaschine bekannt. Viele dieser Sensoranordnungen weisen einen in einem Strömungsrohr angeordneten Steckfühler mit einem Sensor auf.

Die Erfindung wird im Folgenden insbesondere dargestellt unter Bezugnahme auf Heißfilmluftmassenmesser als Sensorelement, wie sie beispielsweise in Konrad Reif (Hrsg.): Sensoren im Kraftfahrzeug, 1. Auflage 2010, S. 146-148 beschrieben sind, ohne darauf beschränkt zu sein. Derartige Heißfilmluftmassenmesser basieren in der Regel auf einem Sensorchip, insbesondere einem Silizium-Sensorchip, mit einer Messoberfläche, welche von dem strömenden fluiden Medium überströmbar ist. Der Sensorchip umfasst ein Heizelement sowie mindestens zwei Temperaturfühler, welche beispielsweise auf der Messoberfläche des Sensorchips angeordnet sind. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden. Heißfilmluftmassenmesser sind üblicherweise als Steckfühler ausgestaltet, welcher fest oder austauschbar in das Strömungsrohr einbringbar ist. Beispielsweise kann es sich bei diesem Strömungsrohr um einen Ansaugtrakt einer Brennkraftmaschine handeln. Der Steckfühler kann eine Bypasskanalstruktur mit einem Einlass und einem Auslass aufweisen, in der das Sensorelement beispielsweise in einem Messkanal angeordnet ist.

Um ein weitgehend störungsarmes Luftmassensignal zu erzeugen, ist eine möglichst gleichmäßige Luftströmung zu dem Steckfühler vorteilhaft, damit die Ansaugluft gleichmäßig durch den Bypasskanal und in diesem über die Messoberfläche des Sensorelementes strömt. Üblicherweise befindet sich bei Brennkraftmaschinen das Strömungsrohr an einem Luftfilterauslass. Der Auslass des Luftfilters ist mit dem Einlass des Strömungsrohrs verbunden. Bei einer Durchströmung des Ansaugtraktes in der Hauptströmungsrichtung treten häufig starke Störmungsumlenkungen auf. Insbesondere im Bereich des Eintritts in das Strömungsrohr existieren in der Nähe der Strömungsrohrwand Gebiete mit niedriger Strömungsgeschwindigkeit. Entsprechend sind die Stromlinien umgelenkt und verlaufen in der Nähe der Strömungsrohrwand nicht parallel zu seiner Achse. In den wandnahen Gebieten kann es dabei Gebiete mit niedriger Strömungsgeschwindigkeit oder Strömungsablösungsbereiche und Rückströmungsbereiche geben. Derartige Veränderungen des Geschwindigkeitsfeldes wirken sich bis zu dem Kernbereich der Strömung aus und können insbesondere bei unterschiedlichen Luftmassenströmen recht sprunghaft auftreten. Außerdem führen Strömungsablösungen zu zeitlich veränderlichen Geschwindigkeitsfeldern. Aufgrund der Veränderungen des Strömungsfeldes in der Nähe des Einlasses und des Auslasses des Steckfühlers ergeben sich eine schlechtere Reproduzierbarkeit des Signals und ein erhöhtes Signalrauschen. Ferner erhöht sich durch solche Strömungsablösungen der Druckabfall.

Viele Sensoranordnungen verwenden zur Abhilfe ein in der Hauptströmungsrichtung durch das Strömungsrohr stromaufwärts des Steckfühlers angeordnetes Gitter. Das Gitter kann beispielsweise in das Strömungsrohr integriert werden und befindet sich üblicherweise einige Zentimeter stromaufwärts des Steckfühlers bzw. des Sensors in der Strömung. Das Gitter hat die Aufgabe, das Geschwindigkeitsprofil in dem Strömungsrohr zu vergleichmäßigen und eventuell vorhandenen Drall aus der Strömung zu nehmen.

Derartige Sensoranordnungen mit einem Gitter sind beispielsweise bekannt aus der DE 10 2008 041 145A1 oder der DE 10 2013 200 344 A1. Die Druckschrift DE 10 2012 211 126 A1 zeigt ein Gitter, das kreisringförmig um eine Mittelachse des Strömungsrohrs ausgebildet ist, wobei das Gitter Gitterringe und radial zu der Mittelachse und den Gitterringen verlaufende Gitterstreben aufweist, wobei die Gitterringe und Gitterstreben zwischen sich Durchlässe für die in der Hauptströmungsrichtung strömende Ansaugluft bilden, wobei die Gitterringe um die Mittelachse herum und koaxial zueinander angeordnet sind und durch die Gitterstreben voneinander getrennt sind, wobei das Gitter einen dem Strömungsrohr zugewandten äußeren Gitterrand und einen innersten Gitterring, welcher der Mittelachse am nächsten ist, aufweist.

### Offenbarung der Erfindung

Die erfindungsgemäße Sensoranordnung verwendet ein Gitter bei dem jeder Gitterring, der näher an der Mittelachse angeordnet ist als ein zu diesem Gitterring benachbarter Gitterring, der näher an dem Gitterrand angeordnet ist, in einer senkrecht zu der Mittelachse durch das Gitter verlaufenden Schnittebene in radialer Richtung eine geringere Gitterringdicke aufweist als der näher an dem Gitterrand angeordnete benachbarte Gitterring.

### Vorteile der Erfindung

Trotz der Verbesserungen des Strömungsverhaltens in dem Strömungsrohr, die mit den im Stand der Technik bekannten Sensoranordnungen durch die dort verwandten Gittertypen erzielt werden konnten, treten oft noch hochfrequente Strukturschwingungen in der Strömung auf, welche das Messverhalten der Sensoranordnung nachteilig beeinflussen können.

Bei der erfindungsgemäßen Sensoranordnung sorgt die genannte spezielle Gittergeometrie dafür, dass hochfrequente Strukturschwingungen deutlich reduziert werden.

Vorteilhafte Ausgestaltungen und Weiterbildungen der Erfindung werden durch die in den abhängigen Ansprüchen enthaltenen Merkmale ermöglicht.

Besonders vorteilhaft ist eine Ausführungsform, bei der zusätzlich zu der oben beschriebenen Ausgestaltung der Gitterringe, jede Gitterstrebe in einer senkrecht zu der Mittelachse des Strömungsrohres verlaufenden Schnittebene und in einer Richtung senkrecht zu den Seitenwänden der jeweiligen Gitterstrebe gesehen eine Gitterstrebendicke aufweist, und bei der mit Ausnahme des innersten Gitterringes die Gitterstrebendicke aller Gitterstreben, die auf einer der Mittelachse zugewandten Seite eines Gitterrings angeordnet sind, in der senkrecht zu der Mittelachse verlaufenden Schnittebene geringer ausgebildet ist als die Gitterstrebendicke von Gitterstreben, die auf einer von der Mittelachse abgewandten Seite dieses Gitterrings angeordnet sind.

Die spezielle Ausgestaltung der Gitterringe und Gitterstreben ermöglicht durch eine in aufwändigen Untersuchungen ermittelte spezielle Verteilung von Gitterringdicken und Gitterstrebendicken eine Optimierung des Strömungsprofils in dem Strömungsrohr vor dem Steckfühler unter weitgehender Eliminierung von Strukturschwingungen der Strömung im Strömungsrohr.

Die vorteilhafte Wirkung wird noch erhöht, wenn zusätzlich jeder Gitterring an seinem stromaufwärtigen Ende eine geringere Gitterringdicke als an seinem stromabwärtigen Ende aufweist und insbesondere eine um wenigstens 10% geringere Gitterringdicke als an seinem stromabwärtigen Ende aufweist. Vorteilhaft ist weiterhin, wenn sich dabei die Gitterringdicke in der Hauptströmungsrichtung gesehen gleichmäßig aufweitet.

Vorteilhaft kann jede Gitterstrebe an ihrem stromaufwärtigen Ende eine geringere Gitterstrebendicke aufweisen als an ihrem stromabwärtigen Ende. Insbesondere kann jede Gitterstrebe an ihrem stromaufwärtigen Ende eine um wenigstens 10% geringere Gitterrinddicke als an ihrem stromabwärtigen Ende aufweisen. Vorteilhaft kann sich die Gitterstrebendicke in der Hauptströmungsrichtung gleichmäßig aufweiten.

Besonders vorteilhaft ist ein Ausführungsbeispiel, bei dem das Gitter außer dem innersten Gitterring noch wenigstens zwei weitere Gitterringe aufweist, die zwischen dem innersten Gitterring und dem Gitterrand angeordnet sind. Bei diesem Gitter ist es vorteilhaft, wenn der innerste Gitterring über beispielsweise vier Gitterstreben mit einem den innersten Gitterring umgebenden zweiten Gitterring verbunden ist und der zweite Gitterring über beispielsweise vier Gitterstreben mit einem den zweiten Gitterring umgebenden dritten Gitterring verbunden ist und der dritte Gitterring über beispielsweise acht Gitterstreben mit dem Gitterrand verbunden ist. Die Anzahl der Gitterstreben ist hier nur beispielhaft dargestellt und kann selbstverständlich auch anders ausfallen. Des Weiteren kann auch die Anzahl der Gitterringe größer oder kleiner als die hier dargestellten drei Gitterringe ausfallen.

Zu Erreichung der angestrebten Wirkung ist es von Vorteil, wenn sich das Gitter in Richtung der Mittelachse über eine Länge von 15 bis 25 mm in dem Strömungsrohr erstreckt, um eine möglichst gute Führungswirkung und Richtwirkung des Gitters auf die Ansaugluft zu erreichen.

### Kurze Beschreibung der Zeichnung

Fig. 1 zeigt einen schematischen Aufbau der Sensoranordnung für ein Ausführungsbeispiel der Erfindung,
Fig. 2 zeigt eine Draufsicht auf das Strömungsrohr aus Fig. 1 mit dem Gitter,
Fig. 3 zeigt einen Teilquerschnitt durch das Gitter entlang der Linie III---III aus Fig. 2,
Fig. 4 zeigt eine Änderung der Gitterstrebendicke in der Hauptströmungsrichtung für drei Gitterstreben aus Fig. 2, die einen unterschiedlichen Abstand zur Mittelachse des Gitters aufweisen.

### Ausführungsformen der Erfindung

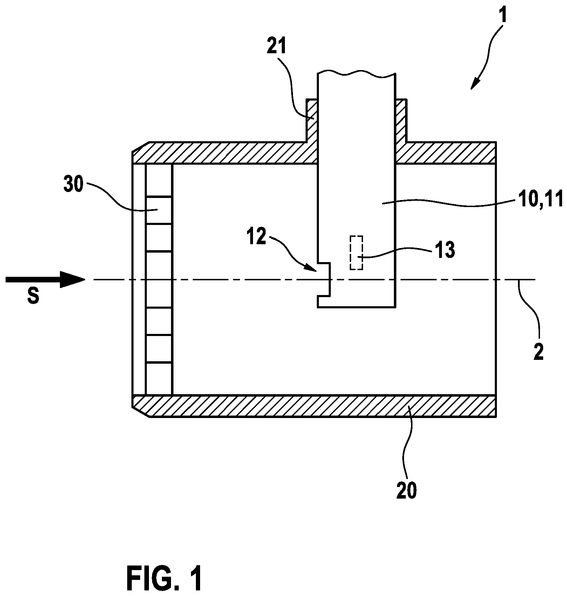

In Fig. 1 ist ein schematischer Querschnitt durch eine Sensoranordnung 1 dargestellt. Die Sensoranordnung 1 umfasst ein Strömungsrohr 20, das beispielsweise als Zylinderrohr ausgebildet ist oder beispielsweise zumindest einen zylinderrohrförmigen Abschnitt aufweist. Das Strömungsrohr 20 kann als Teil eines Ansauglufttraktes in einem Kraftfahrzeug verbaut werden. Das Strömungsrohr 20 weist eine Mittelachse 2 auf, welche durch den Mittelpunkt des kreisförmigen Querschnitts des Strömungsrohrs 20 verläuft. Das Strömungsrohr 20 kann beispielsweise aus Kunststoff gebildet sein. In dem Strömungsrohr 20 strömt Ansaugluft in einer Hauptströmungsrichtung S. Unter der Hauptströmungsrichtung S wird dabei diejenige Richtung definiert in der die Ansaugluft von einem Ende des Strömungsrohres zum anderen Ende des Strömungsrohres in der Hauptsache strömt, ohne dass lokale Strömungen oder Mikrowirbelbildungen betrachtet werden. Bei einem Zylinderrohr verläuft die Hauptströmungsrichtung immer in Richtung der Mittelachse des Zylinderrohrs.

Weiter kann das Strömungsrohr 20 an seinem Außenmantel einen Stutzen 21 aufweisen, durch den ein Steckfühler 10 in das Strömungsrohr 20 derart einsetzbar ist, dass der eingeführte Teil des Steckfühlers 10 beispielswiese bis über die Mittelachse 2 hinaus in das Strömungsrohr 20 hineinragt. Der Steckfühler 10 weist ein Gehäuse 11 auf, in dem ein Bypasskanal mit wenigstens einem Messkanal ausgebildet ist. In Fig. 1 ist der Einlass 12 des Bypasskanals erkennbar, der beispielsweise auf der Mittelachse 2 des Strömungsrohres angeordnet ist, der aber auch versetzt zu der Mittelachse angeordnet sein kann. Der Auslass ist nicht dargestellt. In dem Messkanal ist ein Sensorelement 13 angeordnet, bei dem es sich beispielswiese um einen Sensorchip eines Heißfilm-Luftmassenmessers handelt. Dieser kann mit einer ebenfalls in dem Gehäuse 11 angeordneten Auswerteschaltung kontaktiert sein. Außerhalb des Strömungsrohres 20 kann der Steckfühler 10 einen elektrischen Steckanschluss für den Kabelbaum beispielsweise eines Motorsteuergerätes des Kraftfahrzeuges aufweisen.

Wie in Fig. 1 zu erkennen ist, ist strömungsaufwärts des Steckfühlers 10 in Bezug auf die Hauptströmungsrichtung S der Ansaugluft in dem Strömungsrohr 20 ein Gitter 30 angeordnet. Das Gitter 30 kann beispielsweise aus Kunststoff bestehen. Das Gitter 30 kann beispielsweise einstückig mit dem Strömungsrohr 20 ausgebildet sein oder als separates Teil gefertigt sein, das nachträglich in das Strömungsrohr 20 eingebaut wird.

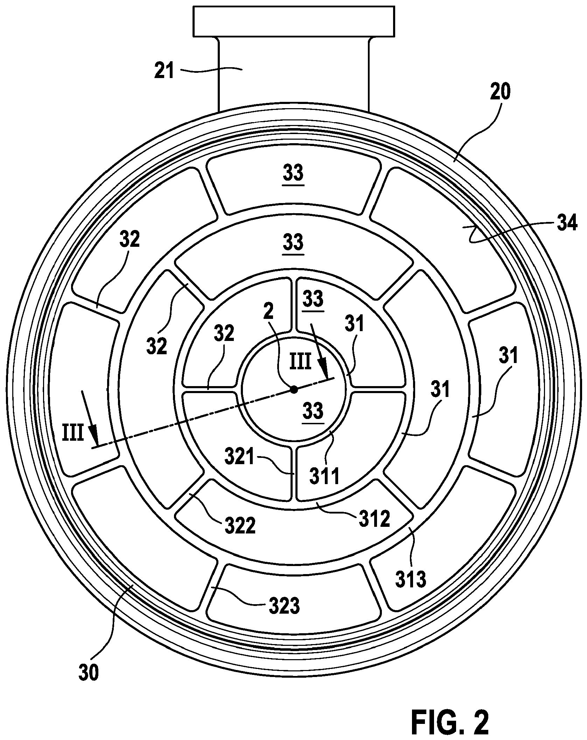

Fig. 2 zeigt eine Draufsicht auf das Strömungsrohr 20 aus Fig. 1 und ein Ausführungsbeispiel für den Aufbau des Gitters 30. Wie in Fig. 2 zu erkennen ist, ist das Gitter 30 kreisringförmig um die in Richtung der Hauptströmungsrichtung S verlaufende Mittelachse 2 des Strömungsrohrs 20 ausgebildet. Die Mittelachse 2 verläuft senkrecht zur Zeichnungsebene der Fig. 2. Das Gitter 30 weist Gitterringe 31 und radial zu der Mittelachse 2 und den Gitterringen 31 verlaufende Gitterstreben 32 auf. Unter einer radialen Richtung wird jeder Richtung senkrecht zu der Mittelachse 2 verstanden. Die radiale Richtung weist von der Mittelachse des Gitters 30 ausgehend nach außen zum Gitterrand 34. Die Gitterringe 31 und Gitterstreben 32 bilden zwischen sich Durchlässe 33 für die in der Hauptströmungsrichtung S strömende Ansaugluft. Wie in Fig. 2 zu erkennen ist, sind alle Gitterringe 31 um die Mittelachse 2 herum und koaxial zueinander angeordnet, das heißt ihre Mittelpunkte liegen alle in der Mittelachse. Die Gitterringe 31 werden durch die Gitterstreben 32 voneinander getrennt. Das Gitter 30 weist einen dem Strömungsrohr 20 zugewandten äußeren Gitterrand 34 und einen innersten Gitterring 311 auf, welcher der Mittelachse 2 am nächsten ist.

Bei dem hier gezeigten Ausführungsbeispiel ist der innerste Gitterring 311 beispielsweise über vier Gitterstreben 321 mit einem den innersten Gitterring 311 umgebenden zweiten Gitterring 312 verbunden. Der zweite Gitterring 312 ist beispielsweise über vier Gitterstreben 322 mit einem den zweiten Gitterring 312 umgebenden dritten Gitterring 313 verbunden. Der dritte Gitterring 313 ist beispielsweise über acht Gitterstreben 323 mit dem Gitterrand 34 verbunden.

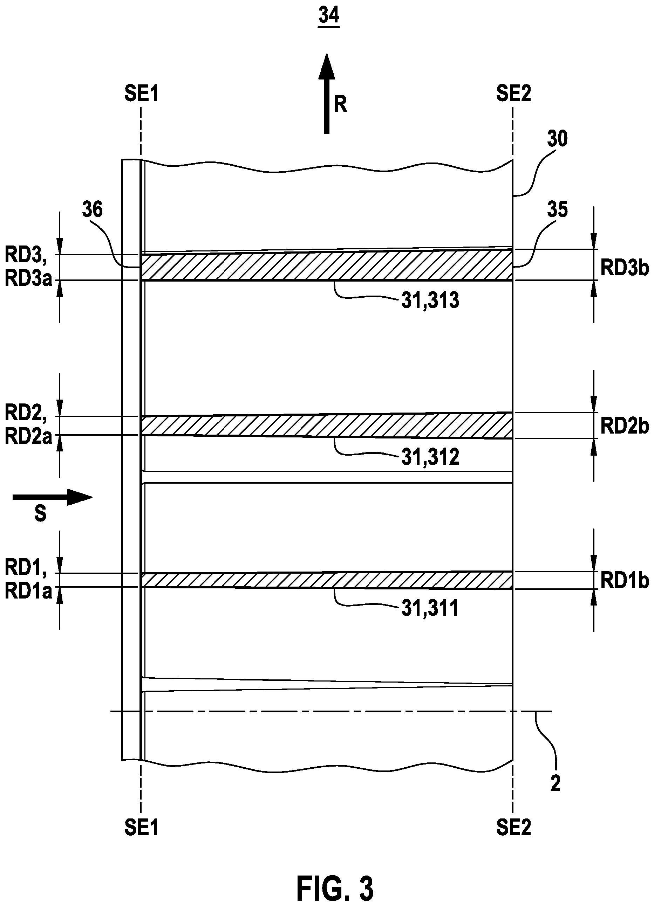

Fig. 3 zeigt einen Teilquerschnitt durch das Gitter 30 aus Fig. 2 entlang der Linie III-III. Eine zu der Darstellungsebene von Fig. 2 parallele Schnittebene SE1 durch den stromaufwärtigen Teil des Gitters 30 ist in Fig. 3 gestrichelt dargestellt. Die Schnittebene SE1 steht also senkrecht auf der Darstellungsebene von Fig. 3.

Wie in Fig. 3 gut zu erkennen ist, weisen die Gitterringe 31 in der Schnittebene SE1, welche senkrecht zu der Mittelachse 2 durch das Gitter 30 verläuft, eine in radialer Richtung verlaufende Gitterringdicke auf, die mit RD1, RD2, RD3 bezeichnet ist. Die immer senkrecht zur Mittelachse 2 zum Gitterrand 34 hin verlaufende radiale Richtung ist in Fig. 3 durch den Pfeil R gekennzeichnet. Wie zu erkennen ist, weist der Gitterring 311 in radialer Richtung R die Gitterringdicke RD1, der Gitterring 312 die Gitterringdicke RD2 und der Gitterring 313 die Gitterringdicke RD3 auf.

Wie weiterhin zu erkennen ist, kann es zusätzlich vorgesehen sein, dass jeder Gitterring 31 an seinem stromaufwärtigen Ende 36 eine geringere Gitterringdicke RD1, RD2, RD3 aufweist als an seinem stromabwärtigen Ende 35. Dies ist aber nicht zwingend und die Gitterringdicken RD1, RD2 und RD3 können in der Hauptströmungsrichtung S auch konstant sein. In dem dargestellten bevorzugten Ausführungsbeispiel weist der Gitterring 311 an seinem stromaufwärtigen Ende in der Schnittebene SE1 die Gitterringdicke RD1a, der Gitterring 312 die Gitterringdicke RD2a und der Gitterring 313 die Gitterringdicke RD3a auf. Am stromabwärtigen Ende der Hauptströmungsrichtung S in der zur der Schnittebene SE1 parallelen Schnittebene SE2 weist der Gitterring 311 die Gitterringdicke RD1b, der Gitterring 312 die Gitterringdicke RD2b und der Gitterring 313 die Gitterringdicke RD3b auf. Die Gitterringdicke eines Gitterrings 31 kann also in der dargestellten Ausführungsform auch vom Abstand der betrachteten Schnittebene vom stromaufwärtigen Ende 36 der Gitterringe abhängig sein. Dabei gilt für jeden dargestellten Gitterring: RD1a ist kleiner als RD1b, RD2a ist kleiner als RD2b und RD3a ist kleiner als RD3b. Wie dargestellt können sich die Gitterringdicken RD1, RD2, RD3 in der Hauptströmungsrichtung S gesehen gleichmäßig aufweiten. Dabei kann es möglich sein, dass die zur Hauptströmungsrichtung S parallelen Flächen der Gitterringe 31 um einen kleinen Winkel schräg gestellt sind, so dass sich ein linearer Anstieg der Gitterringdicken RD1, RD2, RD3 in der Hauptströmungsrichtung S einstellt. An den stromaufwärtigen und stromabwärtigen Enden der Gitterringe 31 können diese an den Kanten mit nicht dargestellten kleinen Krümmungsradien versehen sein.

Wichtig ist die folgend beschriebene spezielle Ausgestaltung der unterschiedlichen Gitterringdicken von verschiedenen Gitterringen. So ist in jeder beliebigen senkrecht zu der Mittelachse 2 durch das Gitter 30 verlaufenden Schnittebene, beispielsweise in der Schnittebene SE1, in radialer Richtung R die Gitterringdicke eines Gitterrings 31, der näher an der Mittelachse 2 angeordnet ist, kleiner als die Gitterringdicke eines benachbarten Gitterrings 31, der näher an dem Gitterrand 34 angeordnet ist. Das heißt also: RD1a ist kleiner als RD2a und RD2a ist kleiner als RD3a. Auch in der Schnittebene SE2 gilt: RD1b ist kleiner als RD2b und RD2b ist kleiner als RD3b. In Fig. 3 ist gut zu erkennen, dass dieser Zusammenhang für jeder beliebige Schnittebene zwischen SE1 und SE2 ebenso gilt. Anders ausgedrückt: In jeder beliebigen, senkrecht zu der Mittelachse 2 verlaufenden Schnittebene durch das Gitter 30 ist in der radialen Richtung R die Gitterringdicke eines näher an der Mittelachse 2 angeordneten Gitterrings 31 kleiner als die Gitterringdicke eines näher an dem Gitterrand 34 angeordneten Gitterrings 31.

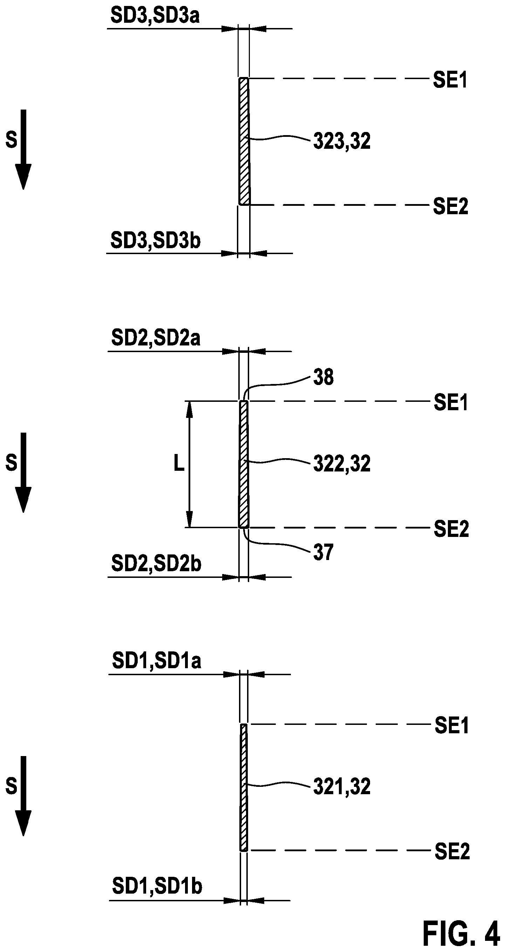

Weiterhin ist es vorteilhaft aber nicht zwingend erforderlich, wenn auch die Gitterstreben eine bestimmte Dickenverteilung aufweisen. Jede Gitterstrebe 32 weist in einer senkrecht zu der Mittelachse 2 verlaufenden Schnittebene SE1; SE2 und in einer Richtung senkrecht zu den Seitenwänden der jeweiligen Gitterstrebe 32 gesehen, eine Gitterstrebendicke SD1; SD2; SD3 auf. Die Gitterstrebendicken SD1, SD2, SD3 der Gitterstreben 321, 322 und 323 sind in Fig. 4 dargestellt.

Die in Fig. 4 gezeigten Schnitte durch die Gitterstreben 32 sind dabei Querschnitte von drei Gitterstreben 32 in drei unterschiedlichen Sagittalebenen, die parallel zur Mittelachse 2 verlaufen. Jede der drei Sagittalebenen verläuft sowohl senkrecht zu der Darstellungsebene der Fig. 2 als auch senkrecht zu der Darstellungsebene der Fig. 3 durch jeweils eine der Gitterstreben 321, 322 und 323.

Wie in Fig. 4 zu erkennen ist, ist mit Ausnahme des innersten Gitterrings 311 (der keine Gitterstreben auf der Innenseite aufweist) die Gitterstrebendicke SD1; SD2; SD3 aller Gitterstreben 32, die auf einer der Mittelachse 2 zugewandten Seite eines Gitterrings 31 angeordnet sind, in jeder senkrecht zu der Mittelachse 2 verlaufenden Schnittebene SE1; SE2 geringer ausgebildet als die Gitterstrebendicke SD1; SD2; SD3 von Gitterstreben 31, die auf einer von der Mittelachse 2 abgewandten Seite dieses Gitterrings 31 angeordnet sind. Das lässt sich auch in Fig. 2 bereits erkennen. Betrachtet man also beispielsweise den Gitterring 312, so sind an diesem die Gitterstreben 321 mit einer geringeren Gitterstrebendicke SD1 auf seiner der Mittelachse 2 zugewandten Seite angeordnet, während die Gitterstreben 322 mit einer relativ dazu größeren Gitterstrebendicke SD2 auf der von der Mittelachse 2 abgewandten Seite dieses Gitterrings 312 angeordnet sind. Es gilt also SD1 ist größer als SD2 und SD2 ist größer als SD3.

Es kann optional außerdem vorgesehen sein, dass die Gitterstreben 32 an ihrem stromaufwärtigen Ende 38 eine geringere Gitterstrebendicke SD1, SD2, SD3 aufweisen als an ihrem stromabwärtigen Ende 37. Dabei kann sich die Gitterstrebendicke SD1, SD2, SD3 in der Hauptströmungsrichtung S gesehen gleichmäßig aufweiten.

Betrachtet man beispielsweise die stromaufwärtige Schnittebene SE1 von Fig. 3, so weisen die Gitterstreben 321 in Fig. 4 auf der Innenseite des Gitterrings 312 in der Schnittebene SE1 die Gitterstrebendicke SD1a auf, während die Gitterstreben 322 auf der Außenseite des Gitterrings 312 in der Schnittebene SE1 die Gitterstrebendicke SD2a aufweisen. Die äußeren Gitterstreben 323, welche den Gitterring 313 mit dem Gitterrand 34 verbinden, weisen in der Schnittebene SE1 die Gitterstrebendicke SD3a auf. Betrachtet man die stromabwärtige Schnittebene SE2 von Fig. 3, so weisen die Gitterstreben 321 in Fig. 4 auf der Innenseite des Gitterrings 312 in der Schnittebene SE2 die Gitterstrebendicke SD1b auf, während die Gitterstreben 322 auf der Außenseite des Gitterrings 312 in der Schnittebene SE2 die Gitterstrebendicke SD2b aufweisen. Die äußeren Gitterstreben 323, welche den Gitterring 313 mit dem Gitterrand 34 verbinden, weisen in der Schnittebene SE2 die Gitterstrebendicke SD3b auf. Wie man in Fig. 4 gut erkennen kann gilt: SD1a ist kleiner als SD1b, SD2a ist kleiner als SD2b und SD3a ist kleiner als SD3b.

Vorzugsweise erstreckt sich das Gitter in Richtung der Mittelachse 2 über eine Länge L von 15 bis 25mm, insbesondere eine Länge L von 20m in dem Strömungsrohr 20.

In einem bevorzugten Ausführungsbeispiel weist das Strömungsrohr 20 einen Innendurchmesser von beispielsweise 63,7 mm auf. Die Gitterringdicken der drei Gitterringe 311, 312, 313 sind in der stromaufwärtigen Schnittebene SE1 und der stromabwärtigen Schnittebene SE2 vorzugsweise wie folgt ausgelegt: RD1a = 0,7 mm; RD1b = 1 mm; RD2a = 1,0 mm; RD2b = 1,3 mm; RD3a = 1,3 mm und RD3b = 1,6 mm. Die Gitterstrebedicke der Gitterstreben 321, 322 und 323 sind in der stromaufwärtigen Schnittebene SE1 und der stromabwärtigen Schnittebene SE2 vorzugsweise wie folgt ausgelegt: SD1a = 0,85 mm; SD1b = 1,15 mm; SD2a = 1,15 mm; SD2b = 1,45 mm; SD3a = 1,3 mm und SD3b = 1,6 mm.

## Patentansprüche

1. Sensoranordnung zur Bestimmung der Ansaugluftmasse einer Brennkraftmaschine, wobei die Sensoranordnung (1) einen in einem Strömungsrohr (20) angeordneten Steckfühler (10) mit einem Sensorelement (13) zur Bestimmung der in dem Strömungsrohr (20) in einer Hauptströmungsrichtung (S) strömenden Ansaugluft und mindestens ein in der Hauptströmungsrichtung (S) stromaufwärts des Steckfühlers (10) angeordnetes Gitter (30) aufweist, wobei das Gitter (30) kreisringförmig um eine in Richtung der Hauptströmungsrichtung (S) verlaufende Mittelachse (2) des Strömungsrohrs (20) ausgebildet ist, wobei das Gitter (30) Gitterringe (31) und radial zu der Mittelachse (2) und den Gitterringen (31) verlaufende Gitterstreben (32) aufweist, wobei die Gitterringe (31) und Gitterstreben (32) zwischen sich Durchlässe (33) für die in der Hauptströmungsrichtung (S) strömende Ansaugluft bilden, wobei die Gitterringe (31) um die Mittelachse (2) herum und koaxial zueinander angeordnet sind und durch die Gitterstreben (32) voneinander getrennt sind, wobei das Gitter (30) einen dem Strömungsrohr (20) zugewandten äußeren Gitterrand (34) und einen innersten Gitterring (311), welcher der Mittelachse (2) am nächsten ist, aufweist, **dadurch gekennzeichnet, dass** jeder Gitterring (31), der näher an der Mittelachse (2) angeordnet ist als ein zu diesem Gitterring (31) benachbarter Gitterring (31), der näher an dem Gitterrand (34) angeordnet ist, in einer senkrecht zu der Mittelachse (2) durch das Gitter (30) verlaufenden Schnittebene (SE1; SE2) in radialer Richtung eine geringere Gitterringdicke (RD1; RD2; RD3) aufweist als der näher an dem Gitterrand (34) angeordnete benachbarte Gitterring (31).

2. Sensoranordnung nach Anspruch 1, **dadurch gekennzeichnet, dass** jede Gitterstrebe (32) in der senkrecht zu der Mittelachse (2) verlaufenden Schnittebene (SE1; SE2) und in einer Richtung senkrecht zu den Seitenwänden der jeweiligen Gitterstrebe (32) gesehen, eine Gitterstrebendicke (SD1; SD2; SD3) aufweist und dass mit Ausnahme des innersten Gitterrings (311) die Gitterstrebendicke (SD1; SD2; SD3) aller Gitterstreben (32), die auf einer der Mittelachse (2) zugewandten Seite eines Gitterrings (31) angeordnet sind, in der senkrecht zu der Mittelachse (2) verlaufenden Schnittebene (SE1; SE2) geringer ausgebildet ist als die Gitterstrebendicke (SD1; SD2; SD3) von Gitterstreben (31), die auf einer von der Mittelachse (2) abgewandten Seite dieses Gitterrings (31) angeordnet sind.

3. Sensoranordnung nach einem der vorstehenden Ansprüche, **dadurch gekennzeichnet, dass** jeder Gitterring (31) an seinem stromaufwärtigen Ende (36) eine geringere Gitterringdicke (RD1, RD2, RD3) aufweist als an seinem stromabwärtigen Ende (35).

4. Sensoranordnung nach Anspruch 3, **dadurch gekennzeichnet, dass** sich die Gitterringdicke (RD1, RD2, RD3) in der Hauptströmungsrichtung gesehen gleichmäßig aufweitet.

5. Sensoranordnung nach einem der vorstehenden Ansprüche, **dadurch gekennzeichnet, dass** jede Gitterstrebe (32) an ihrem stromaufwärtigen Ende (38) eine kleinere Gitterstrebendicke (SD1, SD2, SD3) aufweist als an ihrem stromabwärtigen Ende (37).

6. Sensoranordnung nach Anspruch 5, **dadurch gekennzeichnet, dass** sich die Gitterstrebendicke (SD1, SD2, SD3) in der Hauptströmungsrichtung (S) gesehen gleichmäßig aufweitet.

7. Sensoranordnung nach einem der vorstehenden Ansprüche, **dadurch gekennzeichnet, dass** das Gitter (30) außer dem innersten Gitterring (311) noch wenigstens zwei Gitterringe (31) aufweist, die zwischen dem innersten Gitterring (311) und dem Gitterrand (34) angeordnet sind.

8. Sensoranordnung nach dem vorstehenden Anspruch, **dadurch gekennzeichnet, dass** der innerste Gitterring (31; 311) über bevorzugt vier Gitterstreben (32; 321) mit einem den innersten Gitterring (31; 311) umgebende zweiten Gitterring (31; 312) verbunden ist und dass der zweite Gitterring (31; 312) über bevorzugt vier Gitterstreben (32; 322) mit einem den zweiten Gitterring (31; 312) umgebenden dritten Gitterring (31; 313) verbunden ist und dass der dritte Gitterring (31; 313) über bevorzugt acht Gitterstreben (32; 323) mit dem Gitterrand (34) verbunden ist.

9. Sensoranordnung nach einem der vorstehenden Ansprüche, **dadurch gekennzeichnet, dass** sich das Gitter in Richtung der Mittelachse (2) über eine Länge von 15 bis 25 mm in dem Strömungsrohr (20) erstreckt.

## Claims

1. Sensor assembly for determining the intake air mass of an internal combustion engine, wherein the sensor assembly (1) has a plug-in sensor (10) arranged in a flow pipe (20) and having a sensor element (13) for determining the intake air flowing in a main flow direction (S) in the flow pipe (20), and at least one grating (30) arranged upstream of the plug-in sensor (10) in the main flow direction (S), wherein the grating (30) is formed in the shape of a circular ring around a central axis (2) of the flow pipe (20) that extends in the main flow direction (S), wherein the grating (30) has grating rings (31) and grating struts (32) extending radially relative to the central axis (2) and the grating rings (31), wherein the grating rings (31) and grating struts (32) form apertures (33) between them for the intake air flowing in the main flow direction (S), wherein the grating rings (31) are arranged around the central axis (2) and coaxially with one another and are separated from one another by the grating struts (32), wherein the grating (30) has an outer grating edge (34) facing the flow pipe (20) and an innermost grating ring (311) which is closest to the central axis (2), **characterized in that** each grating ring (31) which is arranged closer to the central axis (2) than a grating ring (31) which is adjacent to this grating ring (31) and is arranged closer to the grating edge (34) has a lower grating ring thickness (RD1; RD2; RD3) in the radial direction in a section plane (SE1; SE2) extending through the grating (30) at right angles to the central axis (2) than the adjacent grating ring (31) that is arranged closer to the grating edge (34).

2. Sensor assembly according to Claim 1, **characterized in that** each grating strut (32), seen in the section plane (SE1; SE2) extending at right angles to the central axis (2) and in a direction at right angles to the side walls of the respective grating strut (32), has a grating strut thickness (SD1; SD2; SD3), and **in that**, with the exception of the innermost grating ring (311), the grating strut thickness (SD1; SD2; SD3) of all the grating struts (32) which are arranged on a side of a grating ring (31) that faces the central axis (2) is lower in the section plane (SE1; SE2) extending at right angles to the central axis (2) than the grating strut thickness (SD1; SD2; SD3) of grating struts (31) which are arranged on a side of this grating ring (31) that faces away from the central axis (2).

3. Sensor assembly according to one of the preceding claims, **characterized in that** each grating ring (31) has a smaller grating ring thickness (RD1; RD2; RD3) at its upstream end (36) than at its downstream end (35).

4. Sensor assembly according to Claim 3, **characterized in that** the grating ring thickness (RD1; RD2; RD3) widens uniformly as seen in the main flow direction.

5. Sensor assembly according to one of the preceding claims, **characterized in that** each grating strut (32) has a smaller grating strut thickness (SD1; SD2; SD3) at its upstream end (38) than at its downstream end (37).

6. Sensor assembly according to Claim 5, **characterized in that** the grating strut thickness (SD1; SD2; SD3) widens uniformly as seen in the main flow direction (S).

7. Sensor assembly according to one of the preceding claims, **characterized in that** besides the innermost grating ring (311), the grating (30) has at least two grating rings (31) which are arranged between the innermost grating ring (311) and the grating edge (34).

8. Sensor assembly according to the preceding claim, **characterized in that** the innermost grating ring (31; 311) is connected via preferably four grating struts (32; 321) to a second grating ring (31; 312) surrounding the innermost grating ring (31; 311), and **in that** the second grating ring (31; 312) is connected via preferably four grating struts (32; 322) to a third grating ring (31; 313) surrounding the second grating ring (31; 312), and **in that** the third grating ring (31; 313) is connected via preferably eight grating struts (32; 323) to the grating edge (34).

9. Sensor assembly according to one of the preceding claims, **characterized in that** the grating extends in the flow pipe (20) in the direction of the central axis (2) over a length of 15 to 25 mm.

## Revendications

1. Ensemble de capteurs permettant de déterminer la masse d'air aspiré d'un moteur à combustion interne, dans lequel l'ensemble de capteurs (1) présente une sonde enfichable (10) disposée dans un tube d'écoulement (20) et pourvue d'un élément de capteur (13) servant à déterminer l'air aspiré s'écoulant dans le tube d'écoulement (20) dans une direction d'écoulement principale (S), et au moins une grille (30) disposée dans la direction d'écoulement principale (S) en amont de la sonde enfichable (10), dans lequel la grille (30) est réalisée en forme d'anneau circulaire autour d'un axe central (2), s'étendant en direction de la direction d'écoulement principale (S), du tube d'écoulement (20), dans lequel la grille (30) présente des anneaux de grille (31) et des entretoises de grille (32) s'étendant radialement par rapport à l'axe central (2) et aux anneaux de grille (31), dans lequel les anneaux de grille (31) et les entretoises de grille (32) forment entre eux des passages (33) pour l'air aspiré s'écoulant dans la direction d'écoulement principale (S), dans lequel les anneaux de grille (31) sont disposés autour de l'axe central (2) et coaxialement les uns par rapport aux autres et sont séparés les uns des autres par les entretoises de grille (32), dans lequel la grille (30) présente un bord de grille extérieur (34) tourné vers le tube d'écoulement (20) et un anneau de grille le plus à l'intérieur (311) qui est le plus proche de l'axe central (2),
**caractérisé en ce que** chaque anneau de grille (31) qui est disposé plus près de l'axe central (2) qu'un anneau de grille (31), adjacent à cet anneau de grille (31), qui est disposé plus près du bord de grille (34) présente dans un plan de coupe (SE1 ; SE2) s'étendant perpendiculairement à l'axe central (2) à travers la grille (30) dans la direction radiale une épaisseur d'anneau de grille (RD1 ; RD2 ; RD3) inférieure à celle de l'anneau de grille (31) adjacent, disposé plus près du bord de grille (34).

2. Ensemble de capteurs selon la revendication 1, **caractérisé en ce que** chaque entretoise de grille (32) présente, dans le plan de coupe (SE1 ; SE2) s'étendant perpendiculairement à l'axe central (2) et vue dans une direction perpendiculaire aux parois latérales de l'entretoise de grille (32) respective, une épaisseur d'entretoise de grille (SD1 ; SD2 ; SD3), et **en ce qu'**à l'exception de l'anneau de grille le plus à l'intérieur (311), l'épaisseur d'entretoise de grille (SD1 ; SD2 ; SD3) de toutes les entretoises de grille (32) qui sont disposées sur un côté, tourné vers l'axe central (2), d'un anneau de grille (31), est dans le plan de coupe (SE1 ; SE2) s'étendant perpendiculairement à l'axe central (2) inférieure à l'épaisseur d'entretoise de grille (SD1 ; SD2 ; SD3) des entretoises de grille (31) qui sont disposées sur un côté, détourné de l'axe central (2), de cet anneau de grille (31).

3. Ensemble de capteurs selon l'une quelconque des revendications précédentes, **caractérisé en ce que** chaque anneau de grille (31) présente à son extrémité amont (36) une épaisseur d'anneau de grille (RD1, RD2, RD3) inférieure qu'à son extrémité aval (35).

4. Ensemble de capteurs selon la revendication 3, **caractérisé en ce que** l'épaisseur d'anneau de grille (RD1, RD2, RD3) s'élargit régulièrement, vue dans la direction d'écoulement principale.

5. Ensemble de capteurs selon l'une quelconque des revendications précédentes, **caractérisé en ce que** chaque entretoise de grille (32) présente à son extrémité amont (38) une épaisseur d'entretoise de grille (SD1, SD2, SD3) inférieure qu'à son extrémité aval (37).

6. Ensemble de capteurs selon la revendication 5, **caractérisé en ce que** l'épaisseur d'entretoise de grille (SD1, SD2, SD3) s'élargit régulièrement, vue dans la direction d'écoulement principale (S).

7. Ensemble de capteurs selon l'une quelconque des revendications précédentes, **caractérisé en ce que** la grille (30) présente en dehors de l'anneau de grille le plus à l'intérieur (311) encore au moins deux anneaux de grille (31) qui sont disposés entre l'anneau de grille le plus à l'intérieur (311) et le bord de grille (34) .

8. Ensemble de capteurs selon la revendication précédente, **caractérisé en ce que** l'anneau de grille le plus à l'intérieur (31 ; 311) est relié de préférence par quatre entretoises de grille (32 ; 321) à un deuxième anneau de grille (31 ; 312) entourant l'anneau de grille de plus à l'intérieur, et **en ce que** le deuxième anneau de grille (31 ; 312) est relié de préférence par quatre entretoises de grille (32 ; 322) à un troisième anneau de grille (31 ; 313) entourant le deuxième anneau de grille (31 ; 312), et **en ce que** le troisième anneau de grille (31 ; 313) est relié de préférence par huit entretoises de grille (32 ; 323) au bord de grille (34).

9. Ensemble de capteurs selon l'une quelconque des revendications précédentes, **caractérisé en ce que** la grille s'étend en direction de l'axe central (2) sur une longueur de 15 à 25 mm dans le tube d'écoulement (20) .
